# EUROPEAN PATENT APPLICATION

(11) **EP 1 693 409 A1**
(43) Date of publication of application: **23.08.2006**
(21) Application number: 05380026.4
(22) Date of filing: 16.02.2005
(51) Int. Cl.: C08J 11/24, C08J 11/22

(54) **Process for the recovery of polyols from polyurethane foam waste using a novel catalyst**

(71) Applicant: REPSOL QUIMICA S.A., E-28046 Madrid (ES)
(72) Inventor: Malaga Mellado, Mariano, 28012 Madrid (ES); Rodriguez Romero, Juan Francisco, 13150 Carrion de Calatrava Ciudad Real (ES); Molero Cerezo, Carolina, 16004 Cuenca (ES); De Lucas Martinez, Antonio, 13004 Ciudad Real (ES)
(74) Representative: Garcia-Cabrerizo y del Santo, Pedro Maria

(57) **Abstract**

This invention involves the recovery of high quality polyols from flexible polyurethane (PU) foam wastes using a two-phase glycolysis process by means of a novel catalyst based on naphthenic salts or mixtures of their components preferably selected from the group of alkaline and alkaline earth salts. The process for preparing a recyclate polyol comprises bringing a polyurethane foam in contact with a glycolyzing compound containing at least two hydroxyl groups, and let the foam and the glycolyzing compound react at high temperature in presence of the naphthenic catalyst. By means of the use of a large excess of a glycolysis agent, much larger than the estequiometric quantity, the reaction product splits in two phases, where the upper layer is mainly formed by the recovered polyol from the PU, and the bottom layer is formed by the excess of glycolysis agent. The upper phase can be purified by a liquid-liquid extraction using an aqueous phase and the excess of glycol of the bottom phase can be recycled to the process by vacuum distillation.

## Description

### FIELD OF THE INVENTION

The present invention relates to a method of recovering a polyol compound useful for the starting materials of cellular polyurethanes in an industrially advantageous manner by a chemical decomposition treatment of scraps generated in the process of producing polyurethane foams or from waste generated after the use of the polyurethane foam products.

### BACKGROUND OF THE INVENTION

Polyurethane polymers are generally produced by the reaction of a polyisocyanate, particularly diisocyanates, with hydroxyl-rich compounds such as glycols and polyester and polyether polyols. The chemical nature as well as the functionality of the reagents could be chosen in agreement with the desired final attributes. This flexibility makes possible to obtain materials of different physical and chemical properties. Consequently the polyurethane products are widely used in a large amount not only as flexible, semirigid, rigid and reinforced rigid cellular polyurethanes in furniture and bedding, cushioning materials in the automotive industry and due to the good heat isolation capacity of rigid foams frequently for thermal isolation, for example in the construction industry or in the refrigeration industry. But also they found application fields as an elastomer in shoe soles, as coatings, adhesives or sealants.

The extensive industrial use of polyurethane polymers due to their commercial success and the production thereof is accompanied by a considerable accumulation of waste or scrap polyurethane polymer, particularly polyurethane foams. A very large quantity of polyurethane foam scrap is generated by slabstock manufacturing or industrial plants involved in the manufacture of articles which employ foam as cushioning element. In such operations, from 10 per cent to up to about 30 per cent of the starting material may end as scrap. Nevertheless, only a limited market exists for a portion of this scrap, which can be used as carpet underlay and athletic mats by means of a mechanical process called rebonding.

So, such scrap polymer is generally disposed of by techniques including incineration or landfill. However such disposal techniques, besides representing an environmental pollution problem, have an economic loss associated with both the land required for landfill and the costly materials used in the preparation of the foam disposed in these operations.

It is therefore of interest to consider the recovery and eventual reuse of such materials. The reuse of plastics and polyurethane foams in particular has been described and consists mainly of energy recovery, physical recycling and chemical depolymerisation. The energy recovery is not exactly a recycling process, but it is a process wherein the polyurethane is used as a fuel to recover heat and vapor thereof. It is well known that the exhaust fumes produced should be strictly controlled to avoid new pollution problems. All of the physical processes are limited by the thermoset character of the polyurethane foams, causing problems upon the qualities of the products.

On the other hand it is highly desirable to use the polyurethane chemical components in new product manufacture. Thus, it is the general purpose of polyurethane chemical recycling to recover one of its constituents which has a particular commercial interest, the polyol, a valuable raw material which can be used to manufacture new foams.

Chemical depolymerisation of polyurethanes may be achieved, amongst other processes, by hydrolysis, hydroglycolysis, aminolysis and glycolysis.

The hydrolysis and hydroglycolysis of polyurethane and polyurea-polyurethanes is well known in the art and has been described in various references. U.S. Pat. Ns. 4,162,995, 4,035,314, 4,316,992, 4,196,148, 4,025,559, 4,399,236 and more recently U.S. Pat. Ns. 5,208,379 and 6,515,036 and European Patent Application EP1006143 disclose hydrolysis processes where the decomposition of polyurethane foams is produced by treating the polyurethane materials with superheated steam or hot water and basic compounds such as ammonia or ammoniun hydroxide in the presence of a suitable organic solvent such as polyol or glycol when a hydroglycolysis is been carried out. In addition, further chemical treatments can be carried out to separate or eliminate primary amines formed. EP 0990674 and German Patent Application DE 4217024 describe a hydroglycolysis process in which a polyamine compound and a polyol compound are recovered by first dissolving the polyurethane in a solubilizing agent containing a polyamine compound, a low molecular glycol or an amino alcohol, and then hydrolyzing the resulting solution with liquid water.

In principle, the amine obtained from the hydrolysis processes can be separated from the hydrolysis reaction mixture and after purification, it can be used again as the raw material for the isocyanate process, but the unfavorable economic cost of this process has prevented its industrial application.

Aminolysis processes as described in the art involve treating polyurethane at high temperature with a liquid mixture which consists of an alkanolamine and a catalyst such as a metal hydroxide to obtain both the polyol and the amine. Some examples are U.S. Pat. No. 4,110,266 and RO 082464, furthermore when a two phase product is obtained one of them subsequently can be reacted with an alkylene oxide in order to improve its applicability as described in U.S. Pat. No. 5,274,004.

One great disadvantage of this amynolysis processes is related to the increased free amine value obtained in the recovered polyol. The amines have an adverse effect in the polyurethane systems formed from the recycled polyols, these amines react with isocyanates to yield polyureas and also greatly accelerate the polyurethane formation reaction. These urea groups can undesirably harm physical properties and reduce the controllability of the polyurethane formation reaction by other catalysts.

The most advantageous chemical method, generally named glycolysis or alcoholysis, involves mixing polyurethanes and/or polyurea-polyurethane products with compounds containing at least two reactive hydroxyl groups. The mixture is reacted to produce a liquid product comprising a mixture of compounds containing hydroxyl end groups, i.e., a recyclate polyol. The recyclate polyol can be employed alone or in combination with virgin polyols to prepare polyurethane compounds preferably foams but may also be used in various polyurethane, polyurea-polyurethane and polyisocyanurate applications.

The glycolysis of polyurethane is known in the art and has been described in various references. Such references include a number of patents, for example UK Patent Application GB 2272445, DE 19917932 and U.S. Pat. Nos. 4,014,809, 4,039,568, 3,708,440 and 4,511,680. The process described thereby may be either batchwise or continous. In U.S. Pat. No. 4,159,972 and DE 4140967 it has also been proposed a further purification after the glycolysis which consists of recovering under vacuum the low molecular weight diol solvent used.

The recycled polyol obtained after a glycolysis process can be used in mixture with virgin polyols, as described in EP 05422806, where the glycolyzate is employed dispersed in a high molecular weight virgin polyol to prepare polyurethanes or polyurethane-polyureas. In EP 0011661 it is described a process which comprises a previous mixture of the glycolyzate with a high molecular weight polyol and a further purification removing under vacuum the low molecular glycolysis agent used.

These various glycolysis methods basically differ in the glycols, catalysts and reaction conditions employed although generally the depolymerization reaction mechanism itself is very similar in all cases.

In the glycolytic processes, the inherent reaction selectivity and water content in the glycols as well as the residual moisture in the polyurethane compounds lead to the formation during the recycling process of the amines derived from the isocyanates used in the starting polyurethane due to secondary hydrolysis reactions. Aromatic amines, particularly primary aromatic amines are formed from toluene diysocyanate and methyl diphenyl diysocyanate. Toluene diamine and methyl diphenyl diamine are not only suspected or regulated carcinogen agents and therefore an undesirable hazard but also have the adverse effect in the polyurethane systems as previously mentioned.

Several chemical processes have been proposed in order to reduce the free amine value by means of reacting them with another compound. U.S. Pat. No. 3,983,087, WO 01/64778, DE 4215014 and EP 0601596 disclose processes wherein the polyol recovered from polyurethane foam is reacted with an alkylene oxide. One method of removing the amines from the recycled polyols includes treating the glycolysis batch with monomeric acrylic acid. The acrylic acid reacts with the aromatic amines formed during glycolysis and is incorporated into the recycled polyol as described in EP 0542806. In another method, described in EP 0592952 monofunctional and/or difunctional glycidyl ethers are reacted whereas in EP 0682063 a low molecular weight urea and/or carbamic acid ester is reacted. EP 0838492 provides a homogeneous recycled polyol by reaction with a cyclic carbonate and EP 0610719 applies a diakyl carbonate or a dicarbonyl compound. Patents EP 0990674 and DE 4217024 disclose a method of further purification after hydrolyzing the glycolyzate products of polyurethane to recover an isocyanate reactive compound and the polyol. In DE 19519333 is claimed a process which comprises treating the product with a carboxilic acid triester after the glycolysis.

Other processes are described in order to improve the final properties of glycolyzed compounds such as EP 0718349 where the glycolysis is carried out adding epoxided native fatty oils or U.S. Pat. No. 4,044,046, where a halogenated ester of phosphoric acid, for example tris (chloroethyl) phosphate, is added to precipitate a solid amine. In DE 3702495 a polymeric derivative of carboxylic acid is added to the glicolyzate in order to improve their hydroxyl number and functionality to be further applied in rigid or semirrigid polyurethane foams.

For plastic waste containing a mixture of polyurethanes and termoplastics EP 733669 relates a glycolysis process in which a glycidyl ether is added to keep the aromatic amine content in glycolyzate.

Recently several methods for glycolyzing polyurethanes have been developed wherein a flexible foam is treated to form an upper layer and a bottom layer. Said methods are described in U.S. Pat Nos. 5,714,523 and 5,691,389 and EP 0723564. The upper layer contains the high molecular weight polyol which was used to prepare the foam; this polyol may be reused to prepare flexible polyurethane foams. The lower layer, mainly formed by the glycolyzing component and by-products may be used for making for example rigid polyurethane after alkoxylation. This kind of process wherein the glycolyzate splits in two phases are easily conducted with flexible foams due to the high molecular weight of their constituent polyols which usually present a low solubility in the glycol used to decompose the foam, and allow to obtain a high quality recovered polyol, less polluted than in the homogeneous processes. Some patents previously mentioned, as U.S. Pat No. 5,691,389 and EP 0723564 propose a further purification to improve even more the purity in such a way that the recovered polyol can replace the virgin one in a flexible foam formulation. This purification consists of an extraction with another immiscible polyol compound batchwise or continuously. In U.S. Pat No. 5,714,523 a further purification is described, which deals with hydrolyzing the bottom layer before alkoxylation, and where said bottom phase may be subjected to purification e.g. evaporation or distillation in order to remove the decomposing reagent.

Therefore it is a subject matter of the present invention to provide a high quality recovered polyol from flexible polyurethane foams using a two phase process wherein a flexible polyurethane foam is glycolyzed by using an advantageous and novel catalyst, splitted into an upper phase and a lower phase, being the upper phase mainly formed by the recovered polyol and increasing its purity even more by means of a simple and economic aqueous extraction process. The lower phase obtained may be used in a useful way after purification and/or further chemical treatment.

### BRIEF DESCRIPTION OF THE INVENTION

The invention is concerned to a process for glycolyzing a flexible polyurethane foam by bringing scrap flexible polyurethane foam in contact with a glycolyzing agent formed by a short chain glycol selected from a polyoxoethylene or a polyoxopropylene, and a novel catalyst derived from naphthenic acid which promotes glycolysis of the polyurethane foam, let them react at high temperatures, and then let the glycolyzate split into an upper phase and a lower phase, where the upper phase is mainly formed by the recovered polyol from the polyurethane foam and the lower phase is formed by the glycolyzing compound an other by products.

The invention proposes optionally to perform a further purification of the upper phase which comprises an extraction with a slightly acid aqueous solution or water to increase the recycled polyol quality and an alkoxylation of the bottom phase with propylene or ethylene oxides to obtain a polyol useful in rigid polyurethane manufacture. In order to recover the excess of glycolyzing agent used during the decomposition, the lower phase obtained can be subjected before the alkolxylation to distillation under reduced pressure to obtain a light distillate fraction containing the glycolyzing agent and a heavy fraction formed mainly by isiocyanate derived products that may be reused in rigid polyurethane production by a further alkoxylation with propylene or ethylene oxides.

### DETAILED DESCRIPTION OF THE INVENTION

Typical polyurethane flexible foams containing urea type and urethane type linkages which can be applied to this process are produced by reaction of products containing isocyanate groups and a high molecular weight polyether polyol. These products are reacted in the presence of a blowing agent, generally water, to produce a polymer and a gas such as carbon dioxide. As a result of entrapment of the gas within the resultant polymer the volume is increased and the density reduced, producing a foamed urethane polymer.

Polyisocyanates often used in making flexible polyurethane foam, and found especially suitable for the method herein proposed, include aromatic polyisocyanates like toluenediisocyanates (TDI) and methylene diphenyl isocyanates (MDI) having an isocyanate functionality of at least two, and mixtures thereof.

The high molecular weight ether polyol typically used in making flexible foam has a molecular weight (number average) in a range below 10.000 as, for example in a range between about 2000-9000 and the two phase glycolysis method is advantageously applicable to flexible foam made with polyether polyols such as polyether triols. Other compounds such cross-linking agents, chain extenders, catalyst, surfactants or fillers are often used in the preparation of flexible foams.

Although in principle any such flexible polyurethane foam may be used, TDI based, polyether polyol based, fully water blown flexible polyurethane foams are preferred.

In carrying out the process of the invention, the polyurethane foam received from postconsumed products or, more advantageously, from slabstock manufacturing is preferably chopped, scrapped or ground to particles of relative small size in order to reduce the time necessary for the reaction to take place, preferably having an average diameter between 1 mm and 5 cm.

The present invention is concerned to a process for preparing recycled polyol by reacting flexible polyurethane foam in a glycolyzing compound, wherein the glycolyzing compound is a short chain glycol which is immiscible with the high molecular weight polyol recovered in the process in such a way that they can form a biphasic mixture and is preferably selected from a polyoxoethylene or a polyoxopropylene, and among them the preferred glycolyzing agents are monoethylene glycol, diethylene glycol and monopropylene glycol and mixtures thereof.

The glycolysis of the polyurethane foam is carried out in presence of a catalyst in order to enhance the reaction rate in an amount of 0.001 to 10% and preferably 0.001 to 5% by weight based on the weight of the polyurethane foam, where the catalyst is a naphthenic salt of naphthenic acids or mixtures of their main components and it is preferably selected from the group consisting of alkaline and alkaline earth salts. Naphthenic acids are a complex mixture of carboxylic acids obtained as a petroleum fraction generally classified as monobasic carboxylic acids, composed predominantly of alicyclic acids containing single or multiply fused rings, although other carboxylic acid components include acyclic fatty acids and aromatic carboxylic acids, which are present in different grades, depending on the crude oil origin but usually composed of carboxylic acids which contain from 10 hydrocarbon atoms to 25 or more.

The process comprises initially mixing the short chain compound and the catalyst and heating the mixture to a temperature between 140 °C and 220 °C, preferably between 180 °C and 200 °C or heating the short chain compound to a temperature between 140 °C and 220 °C, preferably between 180 °C and 200 °C, and then adding the catalyst and the polyurethane. The mixture is then reacting for a period ranging between 1 to 10 hours, maintaining the desired temperature. This temperature range is selected since too low temperatures lead to a low rate of decomposition, while too high temperatures may cause side reactions such as cleavage of ether linkages or condensation reactions, causing a reduction in yield. The addition process can be carried out continuously for a period of time according to the dissolution rate of the polyurethane foam or batchwise.

The reaction may be carried out in air but is preferably carried out in an inert gas atmosphere. Advantageously nitrogen atmosphere is employed. This produces a product with less oxidative degradation and hence less coloration and less impurities than when carrying out of the reaction in air.

The reaction time can generally be from less than 1 hour to about 10 hours but preferably the reaction time is from about 1 to 6 hours, most preferably lower than 4 hours, depending on the physical and chemical properties of the polyrethane scrap, the glycolyzing compound and the catalyst employed. When the reaction is complete, as determined by viscosity determination, infrared spectral analysis, gel permeation chromatography or thelike, the reaction stirring is stopped to allow the mixture to split into two phases during a period of time lower than 12 hours, during this process, sooner or later, the reaction products are cooled, or allowed to cool to at least a temperature 100 °C lower than the reaction temperature.

After the mixing process is stopped and the reaction mixture is allowed to cool or is cooled, the reaction products, which have been allowed to split into two phases, are collected separately by decanting the phases or by means of a mechanical operation such as centrifugation but it is preferred to collect the product without mechanical devices. The upper phase obtained thereby is mainly formed by the recovered high molecular weight polyol obtained from the foam reacted without loss of molecular weight (hereinafter called polyol phase), and the lower phase contains predominantly the excess of glycolyzing compound used, products having a low molecular weight obtained by the transesterification reaction of the urethane bond with the glycolyzing compound and other short chain products containing amine and hydroxyl groups (hereinafter called glycol phase). Occasionally, when the polyurethane foam formulation includes mineral loads, for example calcium carbonate, a solid phase formed by these mineral loads is additionally obtained.

The polyol phase may be used as a polyol or mixed with fresh polyol in the production of further polyurethane foam by incorporating it to a reaction mixture together with an isocyanate and blowing agent, in presence of suitable catalysts and surfactants and the additives commonly used. Nevertheless in order to improve the purity and quality of the recovered polyol even in such a way that these properties were almost the same of a fresh polyol, it is preferred to carry out a further purification of the polyol phase.

Thus, in another aspect, the present invention is also related to a further purification of the polyol phase in order to reduce the amount of glycolyzing compound and by-products of the glycolysis reaction which comprises an extraction process and optionally removing of the extraction compound remaining in the recovered polyol.

The polyol phase obtained is subjected to an extraction process by bringing it into contact with an extracting acid aqueous solution being immiscible with it, namely, dissolving a maximum amount of 30% by weight at room temperature, mixing the extracting compound and the polyol phase, allowing the mixture to separate into two phases and collecting these two phases separately by decanting the phases or by means of a mechanical operation such as centrifugation, but it is preferred not to use a mechanical device. The extraction process may be conducted continuously or batchwise, if the process is carried out batchwise this may be done up to 5 times, preferably once or twice.

This extraction process with an aqueous solution reduces the quantity of remaining amount of glycolyzing compound in the polyol phase, as well as the transesterification reaction products of the urethane bond with the glycolyzing compound and other short chain products containing amine and hydroxyl groups due to their higher affinity by the aqueous media.

The extraction process may be carried out at room temperature or advantageously at higher temperatures, selecting these temperatures at a lower value than the boiling point of the extracting compound, usually lower than 95 °C but preferably lower than 85 °C.

The weight ratio of extracting compound used may range between several values, but preferably from 0.25:1 to 4:1. An additive can be added if desired to improve phase separation. The extracting solutions preferably are prepared from the group of mineral acid, e.g. hydrochloric acid, nitric acid, sulfuric acid or phosphoric acid, dissolved in water in such a way that they reach pH values ranging from 1.0 to 7.0, but desirably greater than 3.

In another embodiment, the present invention is further concerned to a purification of the polyol phase by means of an extraction process using pure water, wherein said extraction process is conducted in the same way as described above for the extraction process using a slightly acid aqueous solution as extracting compound.

After the extraction with the aqueous solution or water, the water content of polyol is too high for conventional reuse therefore the extracting solution or the extracting water have to be removed from the polyols obtained by introducing it into a dehydrator where most of the water can be gasified under reduced pressure by means of a pressure-control valve, also it can be removed by distillation under reduced pressure or by bubbling with dry nitrogen. The polyol recovered hereby shows properties equivalent to the starting polyol used to produce the flexible foam, which means that it_can be used to make a flexible foam of completely recycled origin by incorporating it in a reaction mixture together with an isocyanate and blowing agent, in presence of suitable catalysts and surfactants and the additives commonly used.

The glycol phase obtained by glycolysis of the polyurethane foam is mainly formed by the excess of glycolyzing agent employed and low molecular weight compounds containing urethane bonds produced by the transesterification reaction in the polyurethane chain. These products contain hydroxyl end groups suitable to react with isocyanates to obtain new polyurethane compounds. But due to secondary hydrolysis reactions the glycol phase also contains primary amines derived from the isocyanates used in the starting polyurethane. The presence of such amines when preparing fresh polyurethane polymer is frequently undesirable because of the higher reactivity of such amine groups toward isocyanates when compared to hydroxyl end groups.

Another aspect of the present invention is related to a way to recover this glycol phase for their re-use as polyol in the manufacture of new polyurethanes. Mentioned undesirable amine groups can be removed by treating the glycol phase with an alkylene oxide, preferably propylene and/or ethylene oxide to provide a polyol. The alkoxylation reaction is conducted at a temperature of about 80 °C to about 150 °C, preferably between about 100 °C and about 130 °C, under autogenous pressure in a closed reaction vessel, with addition of an alkoxylation catalyst. Suitable polymerization catalysts include alkali metal carbonates, oxides and salts of organic acids, but preferred polymerization catalysts are alkali metal hydroxides, in particular potassium hydroxide, sodium hydroxide, barium hydroxide and cesium hydroxide. Reaction time can range from 20 minutes to about 24 hours, usually from about 1 to 6 hours depending on the total amount of alkylene oxide to be reacted. The obtained crude polyol may be treated with about 7% mole excess, based on hydroxide content, of acid to provide a finished polyether polyol having a hydroxyl value not specifically limited but preferably from 300 mg KOH/g to 600 mg KOH/g.

Since the glycol phase is mainly formed by the excess of low molecular weight glycol employed to dissolve the polyurethane foam, advantageously a major portion of the original amount of the low molecular weight glycol added is recovered to be subjected to feedback for its use in the dissolving step as the solubilizing agent for the polyurethane. At least about 70% by weight of the original amount used during dissolution is recovered, and more preferably at least about 80% by weight.

According to the present invention the short chain glycol is removed from the glycol phase by vacuum distillation, by heating preferably at a temperature up to 250 °C under reduced pressure, preferably at below 100 mmHg and more desirably below 50 mmHg.

The remaining phase after distillation mostly containing the primary amines derived from the isocyanates used in the starting polyurethane and low molecular weight compounds containing urethane bonds produced by the transesterification reaction in the polyurethane chain, can be reacted with an alkylene oxide, preferably propylene and/or ethylene oxide to provide a polyol. The alkoxylation reaction is conducted in one or more steps at a temperature of about 80 °C to about 150 °C, preferably between about 100 °C and about 130 °C, under autogenous pressure in a closed reaction vessel, with addition of an alkoxylation catalyst. Suitable polymerization catalysts include alkali metal carbonates, oxides and salts of organic acids, but preferred polymerization catalysts are alkali metal hydroxides, in particular potassium hydroxide, sodium hydroxide, barium hydroxide and cesium hydroxide. Reaction time can range from 20 minutes to about 24 hours, usually from about 1 to 6 hours depending on the total amount of alkylene oxide to be reacted. At the conclusion of the polymerization reaction it could be necessary to remove the alkali metal catalyst. Various methods for accomplishing this are the mixture of the crude polyol with water and a water miscible solvent and then subject it to electric coalescence, treatment with an absorbent such as synthetic magnesium silicate or ion exchange techniques. The crude polyol may also be treated with acids to neutralize the alkali metal catalyst forming insoluble salts and their further removal. The process provides a finished polyether polyol having a hydroxyl value not specifically limited but preferably from 300 mg KOH/g to 600 mg KOH/g.

The invention is explained in greater detail in the example set below. The example is not intended to limit the scope of the invention, but only to clarify its content. All percentages and ratios are by weight, unless otherwise indicated.

### EXAMPLE

The polyurethane scrap foam employed as starting material in the process described in this example had been prepared using the following reactants in the indicated proportions:

| | |
|---|---|
| Propoxylated glycerol: | 100 parts |
| (eq. wt= 3500; F-4811, Repsol-YPF) Toluene diisocyanate (80/20): | 42.3 parts |
| Stannous octoate: | 0.29 parts |
| Amine: | 0.19 parts |
| Surfactant (silicone): | 1.65 parts |
| Water: | 3.3 parts |
| CaCO_{3:} | 0.46 parts |
| CH2Cl_{2:} | 1.0 parts |

Scrap from the above foam was reacted in a 1:1.5 proportions with a glycolysis agent in a jacketed 1 dm³ flask equipped with stirrer and refluxing condenser under nitrogen atmosphere to avoid oxidation. The glycolysis agent was constituted by diethylene glycol and the catalyst used was potassium naphthenate in a 2,2 % and was placed in the flask and when the temperature raised 189°C, the required quantity of scrap foam was added during one hour by means of a continuous feeder at a constant rate according to its dissolution, being the feeding rate 5 g min⁻¹. Temperature was kept at 189°C during the feeding and the reaction. After 5 hours the reaction mixture was cooled and allowed to split into two phases.

As demonstrated by gel permeation cromathography, the upper layer or polyol layer was mainly formed by the recovered polyol from the polyurethane and the bottom by the excess of glycolysis agent. A small solid bottom phase was also obtained due to the mineral loads contained in the foam.

The hydroxyl number and acidity of the polyol phase were determined by standard titration methods (in accordance with ASTMD-4274-88 and ASTMD-4662-93, respectively), water content was determined by Karl-Fisher method and the viscosity was determined at 25 °C by a Brookfiel LVTDV-II viscometer. The polyol content was determined by GPC. The obtained values for these parameters are set in following table.

**Table 1.**

| Hydroxyl number | Acidity | Water content | Viscosity | Polyol content |
|---|---|---|---|---|
| (mg KOH/g) | (mg KOH/g) | (%) | (cp) | (%) |
| 171 | 0.018 | 0.21 | 509 | 83.4 % |

The polyol so obtained was mixed for five minutes at room temperature in a 1:1 ratio with an aqueous extracting solution prepared with hydrochloric acid and a pH value of 5.0 and allowed to decant for 24 h. The extraction solution was removed by distillation under reduced pressure, obtaining a polyol content of 90%.

The bottom phase was subjected to vacuum distillation at a pressure of 100 mbar in a round flask equipped with a distillation column and a condenser in order to recover the excess of glycol used. The distillated fraction collected in the temperature range of 170-180°C at gas-phase, which comprised the 80% in weight of the total amount of bottom phase, was constituted by diethylene glycol and therefore can be used again in glycolysis processes. The remaining phase after distillation was reacted with propylene oxide to provide a polyol, following the steps shown in table 2.

**Table 2.**

| STEP | TIME | TEMPERATURE | PRESSURE |
|---|---|---|---|
| | (min) | (°C) | (bar) |
| 1.- Initiator solution synthesis | 120 | 110 | 10e-3 |
| 2.- Propylene oxide addition | 120 | 120 | 3.5 |
| 3.- Unreacted monomer removal | 60 | 110 | 10e-3 |
| 4.- Neutralization | 24 (h) | 90 | 0.98 |

Firstly 60 g of the residue were mixed with 0.57 g of potassium hydroxide as alkoxylation catalyst to synthesize the initiator solution (step 1) under a N₂ atmosphere, heated to the temperature of the experiment and then submitted to high vacuum, as detailed in table 2. In step 2, 149 g of propylene oxide were fed into the reactor at such a rate to maintain the pressure in the reactor constant and after that the reacting mixture was maintained at the same temperature until all propylene oxide was reacted. Afterwards (step 3) high vacuum was applied in order to eliminate residual monomers. At the conclusion of the polymerization reaction the crude polyol so obtained was treated to remove the alkali metal catalyst by ion exchange with 10 g of Amberlite IR-120 (Step 4). The process provided a finished polyether polyol whose chemical properties are detailed in table 3.

**Table 3.**

| Hydroxyl number | K | Water content | Viscosity | Acidity |
|---|---|---|---|---|
| (mg KOH/g) | (ppm) | (%) | (cp) | (mg KOH/g) |
| 315 | 2 | 1.94 | 816 | <0.01 |

## Claims

1. A process for obtaining recyclate polyol comprising bringing a flexible polyurethane foam in contact with a glycolyzing compound in excess in the presence of a catalyst, let the glycolyzing compound and the foam react at a temperature between 140°C and 220°C to create two inmiscible phases and separate them to obtain a recovered polyol phase and a glycolyzing compound phase, wherein the glycolyzing compound contains at least two hydroxyl groups, and the catalysts consists on a naphtenic salt or a mixture of its components.

2. A process according to claim 1 wherein the napthenic salt or mixture of its components is selected from the group consisting of alkaline and alkaline earth salts.

3. A process according to claim 1 or 2 wherein the catalyst amount ranges from 0.001 % to 10% by weight based on the weight of foam.

4. A process according to any of claims 1 to 3 wherein the glycolyzing compound is a low molecular weight polyol selected from polyoxoethylene, polyoxopropylene and their mixtures.

5. A process according to claim 4 wherein the polyol is selected from the group consisting in monoethylene glycol, diethylene glycol, monopropylene glycol and mixtures thereof.

6. A process according to any of claims 1 to 5 wherein the recovered polyol phase obtained is further purified batchwise or continuously by means of a liquid-liquid extraction process at a temperature lower than 95°C by bringing it into contact with an acid solution inmiscible with it at more than 30% by weight at room temperature.

7. A process according to claim 6 wherein the acid solution is prepared from mineral acids and reaches pH values from 1 to 7.

8. A process according to any of claims 1 to 5 wherein the recovered polyol phase obtained is further purified batchwise or continuously by means of a liquid-liquid extraction process at a temperature lower than 95°C by bringing it into contact with water.

9. A process according to any of claims 6 to 8 wherein the weight ratio of extracting compound ranges between 0.25:1 and 4:1 based on the weight of polyol phase.

10. A process according to any of claims 1 to 5 wherein the glycol phase obtained is purified by vacuum distillation at a temperature below 250°C and reduced pressure to recovery the excess of short chain glycol which can be reused in the process and a vacuum residue.

11. Use of the vacuum residue obtained by the method described in claim 10 in the production of crude polyol which may be optionally purified.
